# EUROPÄISCHE PATENTANMELDUNG

(11) **EP 1 383 188 A2**
(43) Veröffentlichungstag der Anmeldung: **21.01.2004**
(21) Anmeldenummer: 03014479.4
(22) Anmeldetag: 02.07.2003
(51) Int. Cl.: H01M 8/02, H01M 8/04

(54) **Brennstoffzelle mit Vorheizzone**

(30) Priorität: 19.07.2002 DE 10232870
(71) Anmelder: DaimlerChrysler AG, 70567 Stuttgart (DE)
(72) Erfinder: Blank, Felix, 78464 Konstanz (DE); Heller, Cosmas, 88045 Friedrichshafen (DE)

(57) **Zusammenfassung**

Die Erfindung betrifft Brennstoffzellen wie sie z.B. für Fahrzeuganwendungen eingesetzt werden. Zur schnellen Aufheizung einer Zelle auf Betriebstemperatur wird vorgeschlagen, den Reaktionsbereich der Zelle (Bipolarplatte) aufzuteilen und beim Start über separate Eingangs- (3a,5a; 3b,5b) und Ausgangsports (4a,6a; 4b,6b) nur einen Teilbereich (1) mit den Reaktanden zu versorgen. Damit erwärmt sich dieser Teilbereich aufgrund der verringerten Größe relativ schnell und die entstehende Reaktionswärme kann durch Kontakt zu benachbarten Reaktionsbereichen (2) und/oder über ein Wärmetransportmittel zum Aufheizen übertragen werden. Nach Erreichen der Betriebstemperatur in diesen Bereichen werden die Reaktanden auch über die benachbarten Reaktionsbereiche (2) geleitet, bis die volle Betriebsleistung der Brennstoffzelle erreicht ist.

## Beschreibung

Die Erfindung betrifft Brennstoffzellen. Insbesondere betrifft die Erfindung Brennstoffzellen wie sie für moderne, schadstofffreie Kraftfahrzeuge eingesetzt werden. Dabei sind typischerweise mehrere Brennstoffzellen (z.B. mit Polymer-Elektrolyt-Membranen, PEM) zu Stapeln zusammengesetzt, um die für den Antrieb erforderliche Leistung zu liefern.

Eine wichtige Anforderung des Kunden an sein Kraftfahrzeug ist die schnelle Verfügbarkeit der gewünschten Antriebsleistung. Die tolerierte Zeitspanne zwischen Aktivierung des Zündschlosses und dem Anfahren des Kraftfahrzeugs liegt dabei im Bereich von wenigen Sekunden. Aktuelle Fahrzeuge, die für ihren Antrieb mit PEM-Brennstoffzellenstapeln (sog. Stacks) ausgerüstet sind, überschreiten diese Zeitspanne noch deutlich. Die Hauptproblematik dabei ist, dass heutige PEM-Brennstoffzellen meistens erst oberhalb von ca. 5°C Anlauftemperatur beginnen, elektrische Leistung zu generieren. Dadurch wird ein Aufheizen der elektrochemisch aktiven Zonen durch eine externe Wärmequelle immer dann notwendig, wenn die Fahrzeugtemperatur unter der Anlauftemperatur der Brennstoffzelle liegt. Erst oberhalb von ca. 5°C kann sich die Brennstoffzelle im allgemeinen durch die anfallende Prozeßwärme - und bei Bedarf auch durch die erzeugte elektrische Energie - selbst auf Betriebstemperatur aufheizen.

Mittlerweile sind auch Brennstoffzellensysteme bekannt geworden, die bei Temperaturen unterhalb von 5°C und sogar unterhalb von 0°C betrieben werden können. Der Betrieb unter diesen Bedingungen ist allerdings ausgesprochen schwierig und nur mit hohem technischen Aufwand zu realisieren. Im Allgemeinen steigt der technische Aufwand für den Betrieb von Brennstoffzellen mit sinkender Temperatur überproportional an.

Aufgrund der Masse und Wärmekapazität der Brennstoffzellen-Stacks übersteigt die für das Aufheizen notwendige externe Heizleistung üblicherweise die im Fahrzeug zu Verfügung stehende Batterieleistung bzw. die Heizleistung der an Bord befindlichen Wärmequellen. Will man die zusätzlichen Kosten vermeiden, die bei einer Erweiterung dieser sich an Bord befindlichen Quellen anfallen würden, kann dies nur durch schrittweises Aufheizen der Brennstoffzellen-Stacks gelöst werden.

In der EP 1009050 A2 sind spezielle Anordnungen aus mehreren Brennstoffzellen-Stacks beschrieben, die für unterschiedliche Betriebstemperaturen (Hochtemperatur, HT und Niedrigtemperatur, NT) ausgelegt sind und beim Anfahren aus tiefen Temperaturbereichen nacheinander aktiviert werden. Dabei wird das extern vorgewärmte Kühlwasser und/oder Kathodengas des zuerst aktivierten NT-Stacks (mit der geringsten erforderlichen Betriebstemperatur) durch den/die übrigen HT-Stacks geführt, um diese sukzessiv auf ein Temperaturniveau zu bringen, ab welchem dort ein Anfahren der elektrochemischen Reaktion möglich wird. Der Nachteil dieser Vorrichtung ist vor allen Dingen das niedrige Spannungsniveau, auf welchem dem Verbraucher (z.B. Elektromotor) die elektrische Eingangsleistung zugeführt wird, da zu Beginn nur einige Brennstoffzellen (die des NT-Stacks) aktiviert sind. Ein schlechterer Wirkungsgrad bei der Bereitstellung der mechanischen Antriebsleitung und eine verminderte Kraftentfaltung ist die Folge. Außerdem wird die Prozeßwärme der zuerst elektrochemisch aktiven Flächen im NT-Stack vergleichsweise schlecht an die Flächen weitergeleitet, die noch zu kalt sind, um selbst elektrochemisch aktiv zu werden. Das erwärmte Kühlmedium der bereits aktiven Flächen muß erst durch die kalten Leitungen und Gasverteilerstrukturen geleitet werden, bis es an den Flächen im HT-Stack ankommt, an die es möglichst schnell möglichst viel Wärmeenergie zum Aufheizen übertragen soll. Zudem bedingt der Einsatz unterschiedlich ausgebildeter NT- und HT-Stacks einen erhöhten fertigungstechnischen Aufwand.

Eine alternative Lösung wird vorgeschlagen in der japanischen Patentanmeldung Publication No. 2001236978 A. Dabei wird eine Brennstoffzelle von einer Flüssigkeit (Wasser) durchströmt, die durch eine externe Heizeinrichtung erwärmt werden kann. Beim Durchströmen der Zelle gibt die erwärmte Flüssigkeit Wärmeenergie zunächst im Einlassbereich an die Reaktionsfläche der Brennstoffzelle ab, wodurch zuerst dieser Teilbereich der Gesamtfläche die erforderliche Betriebstemperatur erreicht. Nach und nach, verstärkt durch die im Einlassbereich einsetzende Reaktion und damit verbundene Wärmeentwicklung in der Zelle selbst, erreicht der übrige Teil der Reaktionsfläche die erforderliche Temperatur. Bei dieser Anordnung kann auf die Verwendung zweier verschiedener Brennstoffzellentypen (NT-, bzw. HT-Stack) verzichtet werden. Nachteilig kann sich hier jedoch auswirken, dass die Reaktionsfläche nur schrittweise die Betriebstemperatur erreicht (ausgehend vom Einlassbereich der Flüssigkeit) während die Reaktanden über die gesamte Fläche der Zelle - also auch die noch kälteren Bereiche - geleitet werden. Die im Einlassbereich einsetzende Reaktion erzeugt Wasser, das beispielsweise vom Oxidationsmittel mitgeführt wird und an den noch kalten Flächenanteilen der Zelle kondensieren kann. Eine Benetzung der Reaktionsfläche in kälteren Bereichen kann sich dann ungünstig auf die Diffusionsvorgänge zur PEM auswirken.

Die vorliegende Erfindung geht aus vom Gegenstand dieser japanischen Patenanmeldung als nächstliegendem Stand der Technik. Ihr liegt die Aufgabe zugrunde, eine alternative Ausgestaltung einer Brennstoffzelle zu entwickeln, die zügig auf Betriebstemperatur gebracht werden kann und die aufgezeigten Nachteile weitgehend überwindet. Diese Aufgabe wird gelöst durch eine Brennstoffzelle mit den Merkmalen des Anspruchs 1. Weitere vorteilhafte Ausführungsformen sowie entsprechende Verfahren zur Ansteuerung/Regelung der erfindungsgemäßen Brennstoffzelle sind Gegenstand der Unteransprüche.

Grundidee der Erfindung ist die Aufteilung der Reaktionsfläche unter Verwendung vorteilhafter Geometrien bzw. Anordnungen der Gasverteiler innerhalb der Brennstoffzelle und des Brennstoffzellen-Stacks. Dies bietet die Möglichkeit für das schnelle und gezielte Aufheizen definierter Zonen aller, für den Antrieb vorgesehenen Brennstoffzellen, sodass dem Fahrzeugantrieb (Elektromotor) in kürzester Zeit und auf hohem Spannungsniveau eine ausreichende Leistung zum zügigen Anfahren bereitgestellt wird. Das hohe Spannungsniveau gewährleistet dabei einen hohen Wirkungsgrad des Elektromotors und damit eine höhere Dynamik beim Anfahren.

Erfindungsgemäß sind die Reaktionsflächen (Flowfields) der Zellen der Stacks in Felder aufgeteilt, welche einen schnellen, partiellen Betrieb der Zelle ermöglichen. Einzelne Teilbereiche der Flowfields (Vorheizbereiche) werden mit Hilfe externer Wärmequellen auf eine Temperatur erwärmt, die mindestens der Anlauftemperatur der elektrochemisch aktiven Flächen entspricht, sodass innerhalb dieser Bereiche der elektrochemische Brennstoffzellenprozess in Gang kommt.

Ein bevorzugtes Ausführungsbeispiel der Erfindung wird im Folgenden beschrieben, wobei Bezug genommen wird auf die Abbildung und darin aufgeführte Bezugsziffern.

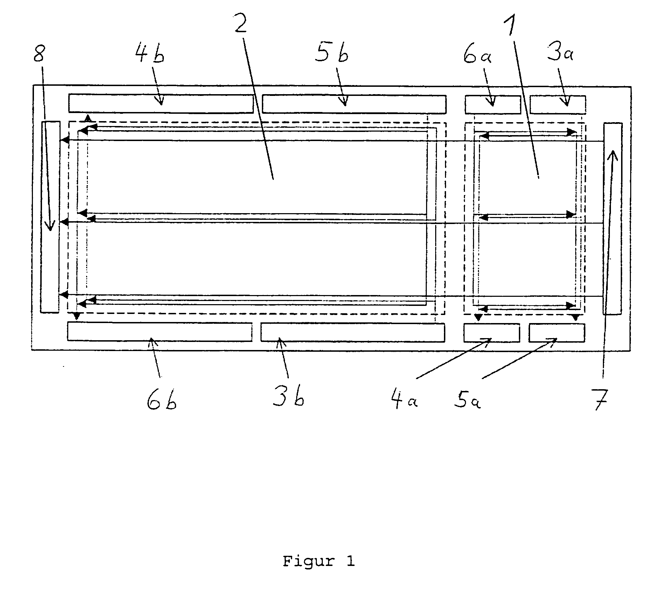

Figur 1 zeigt eine Aufsicht auf eine solche Flowfield-Struktur einer Brennstoffzelle.

Die aktive Zellfläche ist hier (als einfachste Aufteilung) in nur zwei Teilbereiche unterteilt, wobei Feld 1 den oben beschriebenen Vorheizbereich darstellt, der durch externe Quellen auf Anlauftemperatur gebracht wird und Feld 2 den Bereich darstellt, der zumindest teilweise durch die Prozeßwärme und/oder die elektrisch generierte Leistung des Felds 1 aufgeheizt wird. Ein Teil der im Feld 1 zunächst anfallenden Prozeßwärme wird dabei direkt durch Wärmeleitung zum kälteren Feld 2 transportiert.

Durch zwei Eingangsports (3a, 3b) des Oxidationsmittels (Luft oder ein anderes sauerstoffhaltiges Gas) strömt Kathodengas getrennt in Feld 1 und 2 ein und durch Ausgangsports (4a, 4b) wieder aus den Feldern aus. Analog gibt es zwei Eingangs- (5a, 5b) und Ausgangsports (6a, 6b) für das Brenngas (wasserstoffhaltiges Gas). Das Kühlmedium strömt durch den vorgesehenen Eingangsport (7) zuerst durch den Vorheizbereich, wo es durch den Brennstoffzellenprozess im Feld 1 kurz nach dem Anfahren dieses Felds aufgeheizt wird. Anschließend wird es durch das Feld 2 geleitet, um dort die Wärme möglichst vollständig abzugeben und das Feld 2 auf Anlauftemperatur zu bringen, und verläßt die Brennstoffzelle über den Auslassport (8).

Beim Aufheizen des Felds 1 kann dies vorzugsweise nach Entfernen des Kühlmediums geschehen, welches dann kurz vor oder beim Betrieb des Felds 1 wieder dem Zellbereich zugeführt werden kann. Als Variante ist optional ein extra Ausgangsport für das Kühlmedium im Feld 1 und ein extra Eingangsport für das Feld 2 möglich (nicht dargestellt), um beispielsweise vor dem Kühlmitteleintritt in Feld 2 den Massenfluß zu verringern oder kälteres Kühlmittel zuzumischen.

Ein weitere Variante der abgebildeten Anordnung ist die Verbindung des Kathodenausgangsports (4a) des Felds 1 mit dem Kathodeneingangsport (3b) des Felds 2. Diese Verbindung kann auch mit einem Ventil versehen sein, das vorzugsweise erst dann geöffnet wird, wenn das Feld 2 soweit aufgeheizt ist, bis keine Gefahr mehr besteht, dass die Feuchte des einströmenden Gas im kälteren Feld 2 ausfrieren oder ungewünscht auskondensieren kann. Ein analoge Variante ist die Verbindung des Anodenausgangsports (6a) des Felds 1 mit dem Anodeneingangsport (5b) des Felds 2. Diese Verbindung kann entsprechend ebenfalls mit einem Ventil versehen sein, das vorzugsweise erst dann geöffnet wird, wenn das Feld 2 soweit aufgeheizt ist, bis keine Gefahr mehr besteht, daß die Feuchte des einströmenden Gas im kälteren Feld 2 ausfrieren oder ungewünscht auskondensieren kann.

Die schematisch dargestellten Kanalstrukturen zwischen den Ein- und Ausgangsports stellen nur eine Möglichkeit der Kanalstrukturgestaltung dar. Grundsätzlich sind serpentinenförmige, parallele, verzweigte oder/und genoppte Strukturen denkbar.

Vorzugsweise wird in jeder der für die Stromversorgung vorgesehenen Brennstoffzellen ein separater Bereich analog zu Feld 1 vorgeheizt, sodass die elektrische Leistung beim Anfahren auf maximalem Spannungsniveau bereitgestellt wird.

Durch die erfindungsgemäße Flowfield- bzw. Bipolarplattengeometrie wird ein direkter thermischer Kontakt zwischen dem Vorheizbereich und dem restlichen Bereich der Flowfields durch Wärmeleitung hergestellt. Dadurch kann die Wärme, die durch den frühzeitigen Betrieb des Vorheizbereichs als Reaktionswärme gebildet wird, auch durch Wärmeleitung an die kälteren Bereich abgegeben werden, sodass diese schneller auf Anlauftemperatur gebracht werden können.

Im Vergleich zur Anordnung nach EP 1009050 A2 kann zudem Bauvolumen gespart werden, da nicht unbedingt mehr als ein Brennstoffzellen-Stack verwendet werden muß. Dadurch können Verspannungseinrichtungen und Gaszuführungen der Stacks eingespart werden.

In einer weiteren Ausführungsform (nicht dargestellt) ist die Reaktionsfläche (2) neben dem Vorheizbereich (1) in mehrere Zonen mit jeweils separaten Gas-Ein- und Ausgangsports unterteilt. Dies bietet die Möglichkeit, die jeweiligen Zonen sukzessiv durch Gaseinleitung in den Reaktionsprozess einzubeziehen, wenn sich die Temperatur auf Reaktionsniveau angehoben hat. Damit finden nach und nach Reaktionen stets nur in Flächenbereichen mit günstigem Temperaturbereich statt.

Die beschriebene Brennstoffzelle zeichnet sich aus durch schnelles Ansprechen bei ungünstig tiefen Temperaturen. Sie ist insbesondere geeignet für den Einsatz in Kraftfahrzeugen, wo es beim Kaltstart auf schnell zur Verfügung stehende Leistung ankommt. Da die chemischen Reaktionen nur an den aktivierten Flächenbereichen mit vorteilhafter Temperatur ablaufen, ist der Umsatz der Reaktanden und damit der Wirkungsgrad im günstigen Bereich. Auch eine lokale Überfeuchtung der Membran durch Kondenswasser kann weitgehend vermieden werden.

## Patentansprüche

1. Brennstoffzelle mit einer Bipolarplatte, einer Anode und einer Kathode und einem dazwischen angeordneten Elektrolyten (z.B. PEM), wobei Reaktionsstoffe über Einlass- und Auslassports über die Anode und Kathode geleitet werden und wobei ein wärmetransportierendes Medium (z.B. Wasser) über separate Ein- und Auslassports (7, 8) durch die Bipolarplatte geleitet wird,
**dadurch gekennzeichnet,**
**dass** die Bipolarplatte in mindestens zwei Reaktionsbereiche (1, 2) unterteilt ist, wobei jeder Reaktionsbereich Einlass- (3a,3b,5a,5b) und Auslassports (4a,4b,6a,6b) für die Reaktionsstoffe aufweist.

2. Brennstoffzelle nach Anspruch 1,
**dadurch gekennzeichnet,**
**dass** jeder Reaktionsbereich (1, 2) Ein- und Auslassports für das wärmetransportierende Medium aufweist und Mittel vorhanden sind, mit denen das wärmetransportierende Medium über die verschiedenen Reaktionsbereiche (1, 2) separat geleitet werden kann.

3. Brennstoffzelle nach Anspruch 1 oder 2,
**dadurch gekennzeichnet,**
**dass** Mittel zur Veränderung der zeitlichen Durchflussmenge des wärmetransportierenden Mediums vorhanden sind.

4. Brennstoffzelle nach Anspruch 1, 2 oder 3,
**dadurch gekennzeichnet,**
**dass** Mittel zur Temperaturmessung der einzelnen Reaktionsbereiche (1, 2) vorhanden sind.

5. Brennstoffzelle nach Anspruch 4,
**dadurch gekennzeichnet,**
**dass** Mittel vorhanden sind, die den Fluß der Reaktionsstoffe und/oder des wärmetransportierenden Mediums in Abhängigkeit von den Werten der Temperaturmessung beeinflussen.

6. Verfahren zur Ansteuerung einer Brennstoffzelle mit den Merkmalen nach einem der Ansprüche 1 bis 5,
**dadurch gekennzeichnet,**
**dass** zunächst ein erster Reaktionsbereich (1) durch das wärmetransportierende Medium auf Reaktionstemperatur erwärmt wird und Reaktionsstoffe nur über diesen ersten Reaktionsbereich geleitet werden und weitere Reaktionsbereiche (2) erst nach ihrer Erwärmung auf Reaktionstemperatur sukzessiv mit Reaktionsstoffen versorgt werden.

7. Verfahren nach Anspruch 6,
**dadurch gekennzeichnet,**
**dass** Reaktionsstoffe über mehrere Reaktionsbereiche (1, 2), die sich auf Reaktionstemperatur befinden, nacheinander geleitet werden.

8. Verfahren nach Anspruch 6 oder 7,
**dadurch gekennzeichnet,**
**dass** Reaktionsstoffe über mehrere Reaktionsbereiche (1, 2), parallel geleitet werden.
